# EUROPEAN PATENT APPLICATION

(11) **EP 1 331 093 A1**
(43) Date of publication of application: **30.07.2003**
(21) Application number: 03100150.6
(22) Date of filing: 24.01.2003
(51) Int. Cl.: B41C 1/10, B41C 1/05

(54) **Method for reducing perceivable artifacts in a printed image**

(30) Priority: 25.01.2002 US 57564
(71) Applicant: Agfa Corporation, Ridgefield Park, NJ 07660-2199 (US)
(72) Inventor: Larsen, David, 01801, Woburn (US)
(74) Representative: Van Ostaeyen, Marc Albert Jozef

(57) **Abstract**

A method for reducing artifacts in a color printed image (15a), that are perceivable by the naked eye, includes using a different imaging beam (39 versus 48) to start imaging each printing plate (13a, 14a) that is used for a different color plane. Alternatively, a different set of imaging beams may be used to image each printing plate (13a, 14a) used for a different color plane. The method does not require manipulating image data. The method diffuses some errors throughout the printed image (15a) and prevents some errors from being imaged and/or printed which reduces or eliminates the visible perception of artifacts.

## Description

### FIELD OF THE INVENTION

The invention herein generally relates to the field of imaging systems for use in the graphic arts industry. Further, the invention more specifically relates to reducing perceivable artifacts from being formed in printed images.

### BACKGROUND OF THE INVENTION

Color images are often printed using four colors (more or less colors are also known), yellow, cyan, magenta, and black. For each color used on a printing press, a different printing plate is used. If a four color printing press is used to produce a color image, then as many as four printing plates are needed to produce the color image. Each printing plate designated for a different color, and to be used together to print a particular image (the same print job) has the same or a similar image placed upon each plate as is well known in the art.

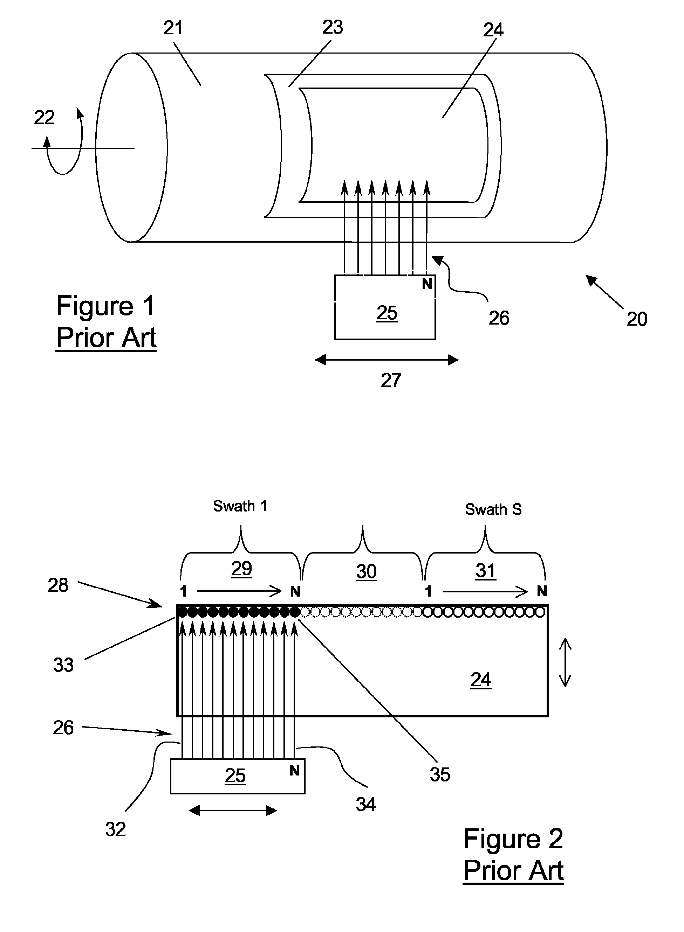

Platesetters are machines used to transfer an electronic image onto a printing plate, for subsequent use on a printing press. Platesetters often use laser based imaging systems to transfer an electronic image onto the plate, in a process called imaging. A typical laser imaging system employs many individual laser beams to image a printing plate. The plurality of laser beams used to image a plate, sometimes called writing beams, or just beams, often emanate from a moveable assembly referred to as an imaging head. An example of a multi-beam imaging head for an external drum platesetter is shown in figure 1. The optic energy produced by the laser (or lasers) is utilized to transfer an electronic image onto a printing plate that is photosensitive or thermally sensitive (including ablative) as is well known in the art.

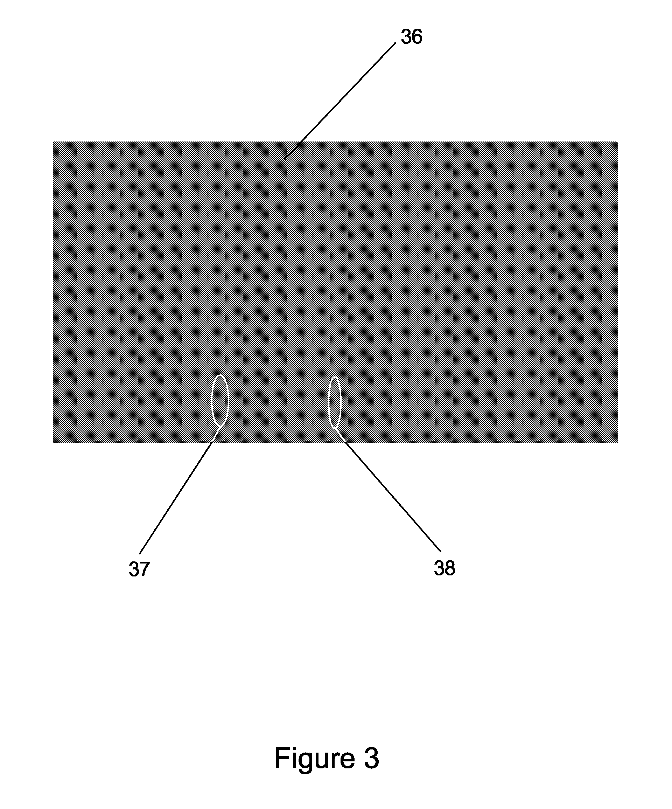

Color images printed using a printing press such as a lithographic printing press are verified for quality prior to, and during printing. A measure of the quality of a printed color image is the presence or absence of artifacts in the image. Artifacts are undesired variations in the printed image, such as the well known banding phenomenon shown in figure 3. Many causes contribute to generation of artifacts in a printed image. Periodic artifacts, such as banding may be caused by repetitive equipment errors in the printing press itself, or in the equipment used during the pre-printing press phase of production, called prepress. Platesetters are an example of prepress equipment.

Image processing is often employed to compensate for equipment errors in an effort to remove artifacts from an image, or alternatively, to prevent artifacts from being formed in the image. United States Patent number 6,185,002 to Askeland et al is one example of where *image data is manipulated* to reduce artifacts such as banding. This intensive data manipulation carries a significant cost in terms of required computing power, memory, and additional software. This data manipulation step, or steps, serves to increase costs and reduce throughput in addition to changing the image via adding or deleting image pixels.

What is needed is a means to reduce or eliminate artifacts in a printed image without having to resort to expensive image processing methods that increase cost.

Further, it is also desirable to be able to reduce or eliminate artifacts without adding additional hardware to existing equipment.

### SUMMARY OF THE INVENTION

The above-mentioned advantageous effects are realised by a method having the specific features set out in claim 1 and by a system having the specific features set out in claim 6. Specific features for preferred embodiments are set out in the dependent claims.

The invention herein solves the problems described *supra* and others, by using a different starting beam of a multi-beam imaging head when imaging each printing plate designated for a unique color plane, subsequently used to print a given image.

The method according to the invention may be applied in a platesetter, an imagesetter, an ink jet system having a plurality of nozzles for each color component etc.

In a platesetter, each image component is preferably formed on a printing plate, by imaging pixels, e.g. image-wise exposure of specific locations of the printing plate, by a plurality of imaging beams, generated by a plurality of imaging elements or image beam generators of a multi-beam imaging head. A composite image may then be formed by mounting on a multi-color printing press a plurality of printing plates, each having an image component. Ink from imaged pixels of a first printing plate is then deposited on a substrate and overprinted by ink from spatially corresponding imaged pixels of a second printing plate, and optionally by ink from a third, fourth, etc. printing plate. A first pixel of a first image component is spatially corresponding to a second pixel of second image component, if the first and second pixel both relate to one specific location of the original image or composite image. Each printing plate is preferably imaged using one imaging head. However, according to the invention a first pixel and its spatially corresponding second pixel may be imaged or exposed by two different imaging beams or image beam generators of the imaging head.

In an inkjet system, the method may use a plurality of print heads, each one for a specific color. Each print head may have a plurality of ink nozzles for operating as imaging elements. The first nozzle of the first print head may be structurally corresponding to the first nozzle of the second print head. The second nozzle of the first print head is then structurally corresponding to the second nozzle of the second print head, etc. and preferably, the last nozzle of the first print head is structurally corresponding to the last nozzle of the second print head. The step of combining the first image component with the second image component may happen even before the first image component is fully printed on the substrate. According to the invention, a first pixel imaged by the first nozzle of the first print head may be combined with a second pixel imaged by a second or third, etc. nozzle, but not the first nozzle of the second print head.

Further advantages and embodiments of the present invention will become apparent from the following description and drawings.

### BRIEF DESCRIPTION OF THE DRAWINGS

The following description may be further understood with reference to the accompanying drawings in which:
Figure 1 is a schematic of a multi-beam imaging machine for imaging printing plates.
Figure 2 is prior art showing how a printing plate is imaged.
Figure 3 is an example of an artifact referred to as banding.
Figure 4 demonstrates how multiple pixels (or dots) can be used to create a color image.
Figure 5 shows one mechanism causing banding.
Figure 6 shows how the invention herein reduces banding at the pixel level.
Figure 7 shows how the invention herein is implemented on a platesetter.
Figure 8 is the example of the banding artifact shown in figure 3 reproduced adjacent other figures to facilitate comparison with figure 9.
Figure 9 is the sample image of figure 8 showing the utility of the invention herein by removing (or preventing) the banding artifact (from being formed).
Figure 10 shows alternate embodiments of the invention.

The drawings are shown for illustrative purposes only, and are not to scale.

### DETAILED DESCRIPTION OF THE INVENTION

Though the following description of the invention herein is described in the context of an external drum platesetter, the application of the invention should not be limited to such. For example, the invention herein may also be employed on internal drum or flatbed platesetters, external or internal drum imagesetters and/or printing presses. Printing plate 23 may alternatively be a piece of film in lieu of a printing plate without deviating from the scope of the invention. Further, the invention herein may be practiced with all types of printing plates, including but not limited to, aluminum, polyester, flexographic etc..

Referring to figure 1, printing plate 23 is mounted on an external drum 21 of a platesetter 20. Plate 23 has an imageable area 24 that an image (not shown) is transferred onto using moveable imaging apparatus 25, often referred to as an imaging head. Drum 21 is rotatable as shown by arrow 22, which in conjunction with moveable imaging head 25, the movement thereof shown by arrow 27, operates to move a plurality of N imaging beams 26 over the entire imageable area 24 of plate 23. The number N, of imaging beams provided by multi-beam imaging head 25 is not restricted. Imaging heads having 96 beams, or as many as 1088 beams are known.

Referring to figure 2, imageable area 24 can be viewed as consisting of many individual picture elements, or pixels, that must be imaged, or "turned on". Though only a single row of pixels 28 are shown in figure 2, it is understood that the entire imageable area 24 consists of pixels. Imaging head 25 is shown having a plurality of imaging beams 26 aligned with the row of pixels 28. The alignment is such that the first beam 32 of N beams is aligned with the first pixel 33 in the row of pixels 28. An N beam imaging head can image a swath 29 having a width of N pixels. From this initial starting position, an image is transferred (imaged) onto plate 23. The first beam used to image the first pixel 33 in this example is beam 32, and is referred to as the starting beam. The starting beam as defined in this application, is the first beam, of a multi-beam imaging head, that is used to start imaging the first pixel of an image to be placed on imageable area 24. In accordance with the invention herein, the starting beam may be a beam other than the first beam in a multi-beam array.

The plurality of beams 26 are moved down plate 23 due to rotation of the drum 21 forming a swath 29 on imageable area 24. Note that though the swaths herein are described as vertical, or parallel to an edge of plate 23, the swaths may also be helical due to the combined rotational movement of drum 21 and lateral movement of imaging head 25. After swath 29 has been imaged, imaging head 25 is positioned to image the next swath 30, and imaging is continued in this manner until the entire electronic image is placed on imageable area 24, the last swath being swath 31. Although three swaths are described, the number of swaths may be any number, and is dependent upon the size of the plate and number of imaging beams among other variables. The total number of swaths is independent of the invention herein.

Once plate 23 has been imaged, it may be further processed (e.g. developed) if required depending upon the type of plate before being used on a printing press. Plate 23 is designated for use with only one color of ink, called a color plane, and is used on a printing press. Consequently, an additional printing plate must also be imaged with the same or similar image for each primary color used in the subsequent printing process for a given print job as is well known in the art. An image placed on a printing plate, designated for a particular color, may not be identical to an image placed on a printing plate designated for a different color plane as is well known in the art. A printing plate designated for use with a particular color on a printing press is referred to as that particular color plate to avoid confusion with other plates. For example, a plate designated for use with the color yellow, is called a yellow plate even though the plate is not actually yellow in color.

When a color image is printed using multiple plates for the different colors as is known in the art, artifacts may be created.

Some types of artifacts may appear as a white line (or other color) in a color field or variations in intensity of a color field or fields. The color fields in which artifacts may appear are not limited to the primary color fields such as cyan, yellow, magenta (reddish) and black. Composite color fields may also be affected such as green. A green color field is created on a printing press by placing a yellow dot on a substrate with one printing plate, and then placing a cyan (a bluish color) dot on top of the yellow dot using a different printing plate. The two colors (composed of ink, wax etc.) mix yielding green.

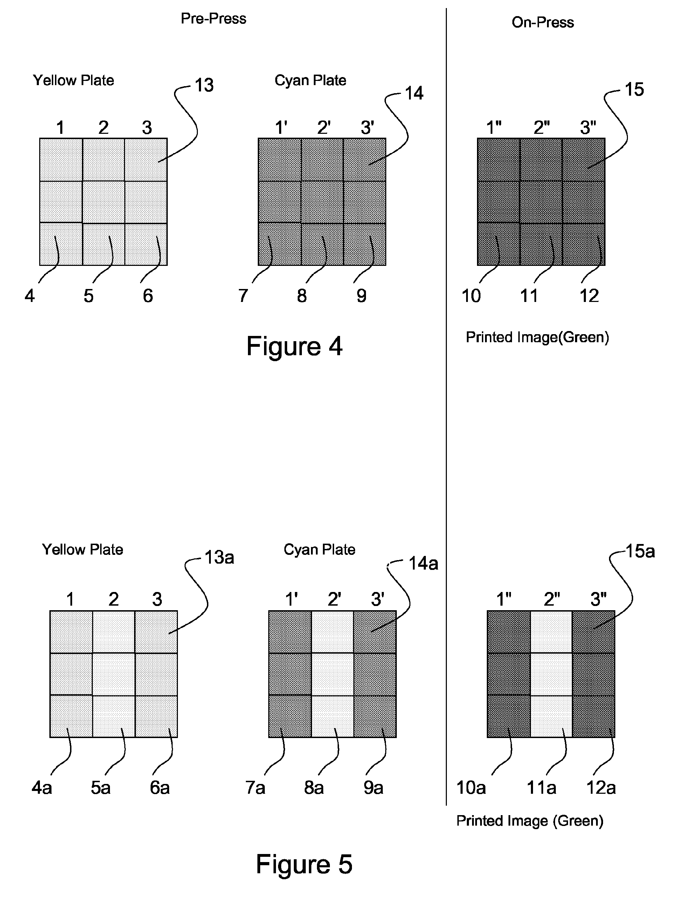

Referring to figure 4, the process can be visualized. A portion of a yellow printing plate 13 is shown consisting of nine pixels arranged in three columns 1, 2, and 3, of three pixels each. A printer's "dot" or halftone dot is composed of a plurality of pixels. The number of pixels per dot is dependent upon the various resolutions required or used (e.g. dpi, number of line screens, spatial frequency of the halftone dots or line frequency etc.) for a given type of printing technology and may or may not be in the range of 20-64 pixels per printers dot. Pixels (or microdots) are typically imaged on a printing plate using a platesetter, and dots (or halftone dots) are typically printed on a substrate (e.g. paper, cardboard, bumper sticker, cloth etc.) using a printing press. Again referring to figure 4, a portion of a cyan printing plate 14 is shown consisting of nine pixels arranged in three columns 1', 2', and 3', of three pixels each. After plates 13 and 14 are imaged in the prepress phase of production, the plates are installed onto a printing press (not shown). Plate 13 is used to place yellow ink onto substrate 15 in the nine-pixel pattern shown. Plate 14 is then used to place cyan ink onto substrate 15, on top of the yellow nine-pixel pattern, also in the same nine-pixel pattern shown. The resulting nine-pixel pattern on substrate 15 has a green color. Though the figures are black and white, the additive effect is similar in that the gray color of substrate 15 is darker than either plate 13 or 14 and represents the result of adding yellow and cyan for illustrative purposes only.

Referring to figure 5, one mechanism that creates artifacts will be shown. The type of artifact to be shown is banding which can be a variation in color intensity, but well may be another type. Each column of pixels shown in figures 4-6 corresponds to a unique, single imaging beam emanating from N beam imaging head 25. For this example, in figure 5, the first three beams of multi-beam imaging head 25 are used to image pixel columns 1,2, and 3. Also, for this example, we assume the second beam has very low optic power output such that pixels imaged by the second beam are not "fully imaged" resulting in a light color being produced when the plate is used for printing. This is shown on plate 13a by the columns of imaged pixels 4a and 6a being darker than column 5a. Since the same physical imaging beams, the first three beams in this example, are used to image *all* color plates, the same problem also exists on the cyan plate 14a as shown by imaged pixel columns 7a and 9a being darker than 8a. The net result is that when plates 13a and 14a are used to print the image on substrate 15a, column 11a of figure 5 is a much lighter green than columns 10a and 12a. This phenomenon occurs at the pixel level on printing plates 13a and 14a, and appears as a series of alternating light and dark bands 37, 38 across the printed image 36 as shown in figure 3.

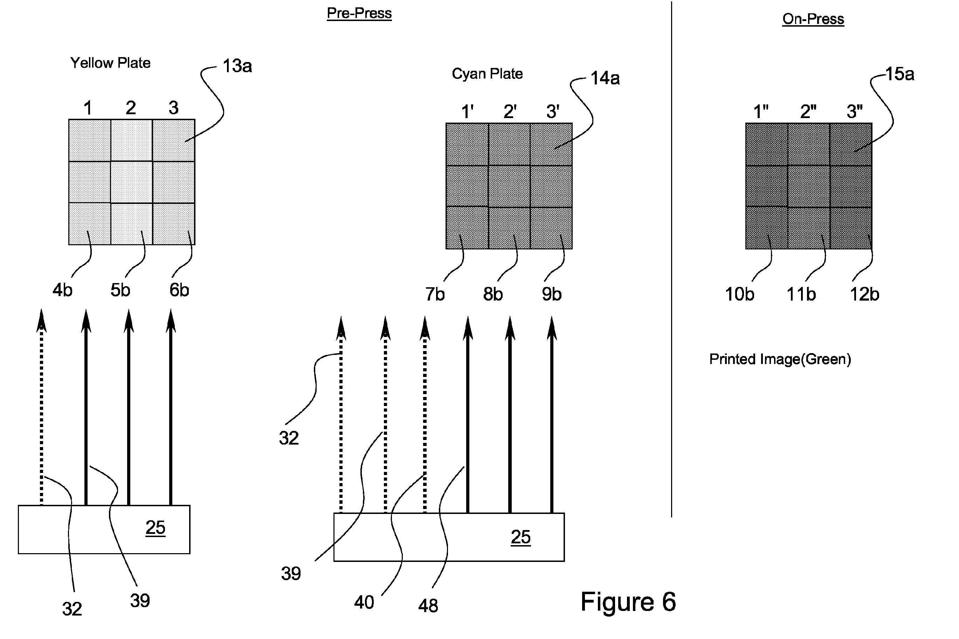

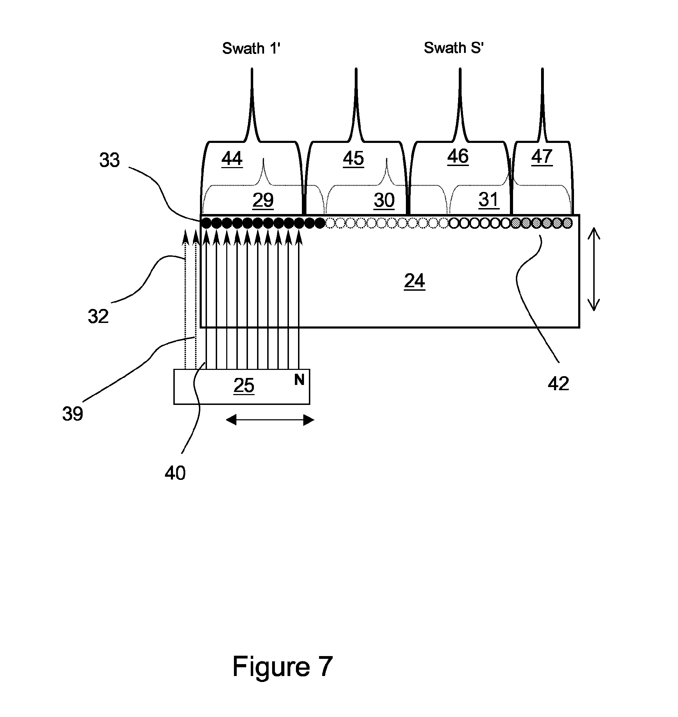

A solution to this problem herein is demonstrated in figures 6 and 7. When imaging plate 13a (designated for use with the color yellow on press) is imaged, the starting beam in this example is actually the second beam 39 of multi-beam imaging head 25. This is seen in figure 6 because beam 39 is aligned with the first column of pixels 1 on plate 13a. Figure 6 shows imaged pixel column 5b being lighter in color than imaged pixel columns 4b and 6b similar to the previous example. However, different from the previous example, the starting beam for cyan plate 14a is actually the fourth beam 48 of multi-beam imaging head 25. Since, in this example, the fourth beam 48 has normal optic power output, imaged pixel column 8b has the same color intensity as adjacent imaged pixel columns 7b and 9b. Note that the starting beams for yellow plate 13a and cyan plate 14a are not the same, therefore a different set of imaging beams are used to image each color plate. This dilutes the effect of any imaging beam of multi-beam imaging head 25 that may be low in optic power or may be out of focus or have other spatial errors. The result of this method is that the color field created on substrate 15a by a printing press using plates 13a and 14a is much more uniform as shown in figure 6. Printed color column 11b is much closer in color intensity to adjacent printed color columns 10b and 12b, than printed color column 11a is to columns 10a and 12a in figure 5.

In a preferred embodiment, a different start beam is used for each printing plate that is designated for use with a unique color plane when used on a printing press for a particular print job. In other words, if a print job (e.g. a magazine cover) requires four colors on press, then the four required printing plates (corresponding to the four required colors) are imaged on an imaging machine using a different starting beam for each plate. The sequence that the starting beams are selected from plate to plate, may be random, pseudo-random, fixed offset, or even sequential. For example, if four plates are required (e.g. designated for yellow, cyan, magenta, and black) the starting beams could be 1, 13, 21, and 4 respectively. In a preferred embodiment, a random beam selection process is utilized

Referring to figure 7, the invention herein is shown compared to the previous technique of using the first beam 32 as the starting beam and using all available beams for all plates. The starting beam 40 is actually the third imaging beam of N beams in multi-beam imaging head 25. This means that the first two beams 32, 39 are not used to image this particular plate. In a preferred embodiment, the first two beams 32, 39 are not used to image only the first swath 44, and all N beams are used to image the remaining swaths (except for residual swath 47). Since a subset of the full number of N beams is used to image at least some of the plates, some pixels 42 remain that would otherwise have been imaged if the full number of N beams were utilized. Consequently, at least one additional swath 47 may be required to fully image the imageable area 24 of plate 23. Using the technique herein, swaths 44-47 are required versus swaths 29-31 to image the same imageable area 24. Each color printing plate, each of which is imaged using a different starting beam (or different set of beams) may each require a different number of swaths in order to fully image each plate.

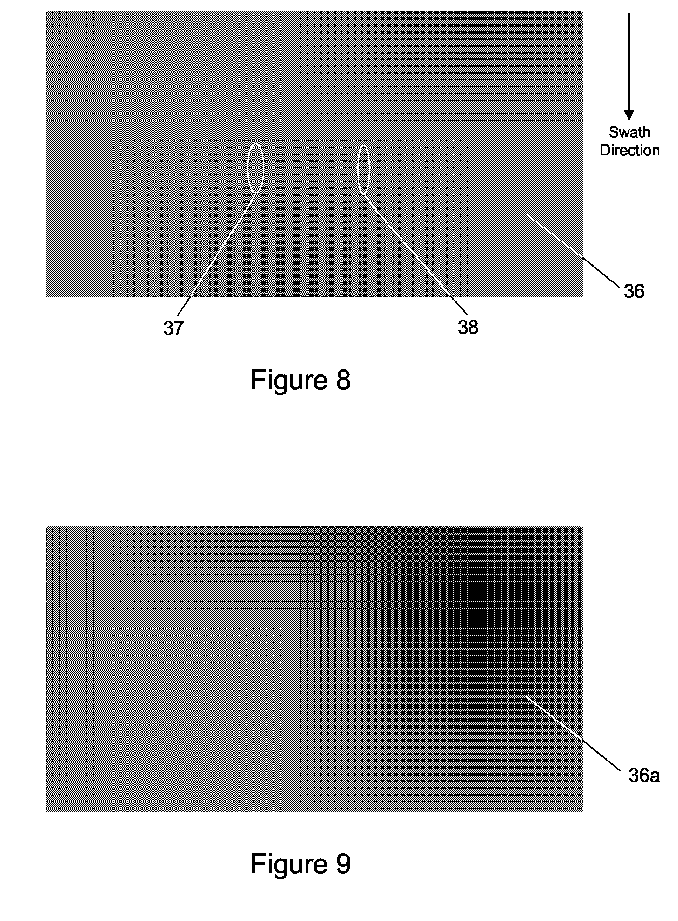

Figure 3 is reproduced as figure 8 to facilitate comparison with figure 9, showing the effect of implementing the invention herein. Figure 8 clearly shows the banding phenomenon on what is otherwise a uniform color image. Alternating bands of light 37 and dark 38 color intensity are seen in the image 36 of figure 8 and are absent in the image 36a of figure 9. Figures 8 and 9 are macro (whole image) representations of the micro representations (pixel level of image) shown in figures 4-6. Even though some banding may still remain after implementing the method of the invention herein, the residual banding is virtually undetectable to the human eye. The banding has essentially been obscured or hidden and is simply not perceivable to the unaided eye.

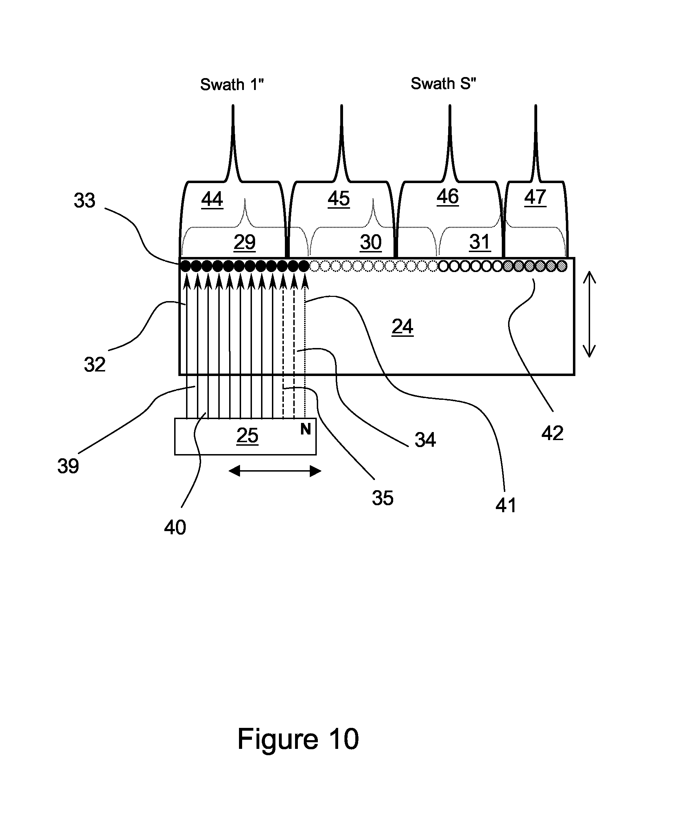

In a first alternate embodiment, the ending beam may be varied and the starting beam may be the same for each color plate. For example, referring to figure 10, starting beam 32 is used to image the first pixel 33 on each color plate (the imageable area 24 for only one plate is shown for clarity). However, the ending beam will be different for each color plate. One implementation of this alternate embodiment could be beams 1 to N are used to image a yellow plate, beams 1 to (N-1) used to image a cyan plate, beams 1 to (N-2) used to image a magenta plate, and beams 1 to (N-3) used to image a black plate. This is illustrated in figure 10 by beams 34, 35, and 41 shown as dotted lines indicating that one or more of beams 34, 35, or 41 is not used to image some of the plates.

A result of the first alternate embodiment is the first swath of the printed image will still have banding since the same beams are used to image equivalent pixels on all the plates. However, the remaining portion of the printed image will have the banding removed (or obscured). Since a single swath is actually a very small portion of the total printed image, the banding in the first swath may not be prominent.

A second alternate embodiment uses different starting and ending beams for each color plate. However, the printed image will still have banding which may be acceptable in some print runs.

The previously described embodiments are variable swath techniques on a plate to plate basis. A third alternate embodiment is to use any of the previously described embodiments, wherein a given color plate (e.g. the yellow plate) has the starting beam, ending beam, or both starting and ending beams varied on a swath to swath basis within the same plate. The result would be some residual banding may remain, which may be acceptable depending on the particular print run.

Though the invention herein has been described for use with printing systems that use printing plates, the invention is not limited to such. The invention herein may also be adapted for use with color printers that do not use printing plates, but use separate color cartridges, such as inkjet printers, laser printers or any multi-beam scanning system.

Further, the invention is also suitable for use with on-press plate making systems (alternatively referred to as plateless printing systems) where temporary printing plates are actually created on a cylinder (or other support surface).

Those skilled in the art will appreciate that numerous modifications and variations may be made to the above disclosed embodiments without departing from the scope of the present invention.

## Claims

1. A method for forming a composite image (15a), comprising the steps of:
- imaging a plurality of first pixels (4b, 5b, 6b) of a first image component (13a), using a plurality of first imaging elements (32, 39) ;
- imaging a plurality of second pixels (7b, 8b, 9b) of a second image component (14a), using a plurality of second imaging elements (32, 39, 40, 48), wherein each of said second imaging elements (32, 39) has a structurally corresponding first imaging element (32, 39) ;
- combining said first image component (13a) with said second image component (14a) to obtain said composite image (15a), by combining each of said second pixels (7b, 8b, 9b) with a spatially corresponding first pixel (4b, 5b, 6b) ;
is **characterised in that** at least one specific pixel (7b) of said second pixels (7b, 8b, 9b) is imaged by an imaging element (48) different from the second imaging element (39) structurally corresponding to the first imaging element (39) that imaged the first pixel (4b), spatially corresponding to said specific pixel (7b).

2. The method according to claim 1, wherein each one second imaging element (32, 39, 40, 48) and its structurally corresponding first imaging element (32, 39) is one image beam generator (32, 39).

3. The method according to any one of the previous claims, wherein each of said image components (13a, 14a) is imaged on a printing plate (23).

4. The method according to the previous claim, wherein each of said printing plates (23) is for transferring a unique color of ink from an ink supply to a single substrate, preferably using a multi-color printing press.

5. The method according to any one of the previous claims, further comprising the step of selecting said imaging elements (32, 39, 40, 48) for imaging said pixels (4b, ... 9b) according to a random, pseudo-random or sequential process or using a fixed or variable offset.

6. A system for preventing perceivable artifacts from being formed in a composite image (15a), comprising:
- means for imaging (20) a plurality of printing plates (23), using an imaging apparatus (25) having a plurality of imaging beams (32, 39, 40, 48), wherein said plurality of printing plates (23) is for a same printing job; and,
- means for using a different imaging beam (48) of said imaging apparatus (25) as a starting beam for imaging each of said plurality of printing plates (23).
